# EUROPEAN PATENT APPLICATION

(11) **EP 4 644 912 A1**
(43) Date of publication of application: **05.11.2025**
(21) Application number: 23911290.7
(22) Date of filing: 13.09.2023
(51) Int. Cl.: G01N 35/10

(54) **AUTOMATIC ANALYZING APPARATUS AND PROBE POSITION DETECTING METHOD**

(30) Priority: 29.12.2022 JP 2022212810
(71) Applicant: HITACHI HIGH-TECH CORPORATION, Tokyo 105-6409 (JP)
(72) Inventor: NODA Kazuhiro, Tokyo 100-8280 (JP); NISHIGAKI Kenichi, Tokyo 105-6409 (JP); HAMASAKI Koshin, Tokyo 105-6409 (JP)
(74) Representative: Strehl & Partner mbB
(86) International application number: PCT/JP2023/033338
(87) International publication number: WO 2024/142506

(57) **Abstract**

Provided are an automatic analyzing apparatus and a probe position detecting method that enable detection of an abnormality in a relative positional relationship between a probe and cleaning water without depending on a surface state of the probe or without depending on electromagnetic noise or physical properties such as conductivity of cleaning water. Included are: a pipetting mechanism that aspirates and discharges liquid by a probe; a syringe that causes the pipetting mechanism to aspirate and discharge the liquid; a flow path connecting the pipetting mechanism and the syringe; a pressure sensor that measures a pressure in the flow path; a cleaning mechanism that discharges cleaning water and cleans an outer wall of the probe with the cleaning water; a probe drive unit that causes the probe under aspiration to move so as to aspirate the cleaning water when the probe passes through the cleaning water; and a control unit that detects an abnormality in a relative positional relationship between the probe and the cleaning water on the basis of a change in the pressure in the flow path when the probe under aspiration passed through the cleaning water in one direction.

## Description

### Technical Field

The present invention relates to an automatic analyzing apparatus and a probe position detecting method.

### Background Art

In an automatic analyzing apparatus such as a biochemical analyzing apparatus or an immunity analyzing apparatus, since different samples or reagents are inspected with the same probe at the time of pipetting, it is necessary to clean the inside and the outside of the probe so that components of the sample and the reagent are not carried over to the next analysis. For cleaning the inside of the probe, a method of aspirating and discharging a cleaning detergent, discharging cleaning water, or the like is used. On the other hand, for cleaning the outside of the probe, a method of immersing the probe in a cleaning detergent, cleaning the outside of the probe with cleaning water, or the like is used.

In order to appropriately and efficiently clean the outside of the probe with cleaning water, it is crucial to monitor a state of cleaning outside the probe.

PTL 1 is known as a technique for monitoring a cleaning state outside a probe. PTL 1 recites in paragraph 0022 that "When pipetting is completed, the outer wall portion of the sample pipetting probe 15 is washed by the cleaning unit 20. This cleaning operation is performed by spraying the cleaning water W while moving the sample pipetting probe 15 up and down".

Then, paragraph 0042 recites that "The signal output unit 71 outputs a signal according to the state of spraying of the cleaning water W onto the sample pipetting probe 15 (cleaning target area WS)). ··· The signal output unit 71 includes the sensor 18 and the signal processing unit 74", paragraph 0049 recites that "The sensor 18 generates a signal whose electrical characteristics change according to the state in which the cleaning water W is sprayed onto the sample pipetting probe 15. ··· The sensor 18 is configured by, for example, a conductivity detection type sensor", the same paragraph recites that "The sensor 18 can generate a pulse signal that turns on/off depending on whether or not the cleaning water W is being sprayed onto the sample pipetting probe 15", the paragraph 50 recites that "the sensor 18 may be configured by, for example, a capacitance detection sensor", paragraph 0054 recites that "The signal processing unit 74 executes processing on the basis of the signal output from the sensor 18 to generate a signal according to the state in which the cleaning water W is sprayed onto the sample pipetting probe 15", paragraph 0090 recites that "The signal processing unit 74 generates a pulse signal whose pulse width varies according to the area (contact area) onto which the cleaning water W is sprayed in the cleaning target area WS", and paragraph 0093 recites that "The state determination unit 73 determines whether the cleaning state is appropriate or not on the basis of the pulse width of the pulse signal received from the signal output unit 71".

Furthermore, FIG.5 and paragraph 0066 describe that "The sample pipetting probes 15C, 15L, and 15R are shown as sample pipetting probes 15 stopped at different positions", and FIGS.6 and 8 and paragraph 0077 describe that "The surface WR onto which the cleaning water W is effectively sprayed onto the outer wall portion of the sample pipetting probe 15L is a part on the right side of the cleaning target area WS. Therefore, to the sample pipetting probe 15L, the cleaning water W can be sprayed only onto a part on the right side of the cleaning target area WS. The same is true for the sample pipetting probe 15R, and a surface of the outer wall portion of the sample pipetting probe 15R onto which the cleaning water W is effectively sprayed is a part on the left side of the cleaning target area WS".

### Citation List

### Patent Literature

PTL 1: JP 2016-085103 A

### Summary of Invention

### Technical Problem

In other words, since the area (contact area) onto which the cleaning water W is sprayed changes depending on a positional relationship between the probe and the cleaning water W, in PTL 1, substantially, a pulse signal whose pulse width varies with the positional relationship between the probe and the cleaning water is generated by a sensor of a conductivity detection type or a capacitance detection type, and the cleaning state of the outer wall of the probe is determined by the pulse width of the generated pulse signal. In short, in PTL 1, an abnormality in the positional relationship between the probe and the cleaning water is detected using a conductivity detection type sensor or a capacitance detection type sensor.

However, in the technique described in PTL 1, since a conductivity detection type sensor or a capacitance detection type sensor is used, there is a possibility that an abnormality in the positional relationship between the probe and the cleaning water cannot be detected when a surface of the probe is unintentionally wet due to dew condensation or the like. Alternatively, when there is a large amount of electromagnetic noise or when conductivity of the cleaning water is low, there is a possibility that an abnormality in the positional relationship between the probe and the cleaning water cannot be detected.

The present invention has been made in view of the above problems, and an object of the present invention is to provide an automatic analyzing apparatus and a probe position detecting method that enable detection of an abnormality in a relative positional relationship between a probe and cleaning water without depending on a surface state of the probe or without depending on electromagnetic noise or physical properties such as conductivity of the cleaning water.

### Solution to Problem

An automatic analyzing apparatus according to the present invention includes, for example, a pipetting mechanism that aspirates and discharges liquid by a probe; a syringe that causes the pipetting mechanism to aspirate and discharge the liquid; a flow path connecting the pipetting mechanism and the syringe; a pressure sensor that measures a pressure in the flow path; a cleaning mechanism that discharges cleaning water and cleans an outer wall of the probe with the cleaning water; a probe drive unit that causes the probe under aspiration to move so as to aspirate the cleaning water when the probe passes through the cleaning water; and a control unit that detects an abnormality in a relative positional relationship between the probe and the cleaning water on the basis of a change in the pressure in the flow path when the probe under aspiration passed through the cleaning water in one direction.

A probe position detecting method according to the present invention includes, for example, a moving step of moving a probe under aspiration so as to aspirate cleaning water when the probe passes through the cleaning water; a measurement step of measuring a pressure in a flow path through which the cleaning water aspirated by the probe flows; and a detection step of detecting an abnormality in a relative positional relationship between the probe and the cleaning water on the basis of a change in the pressure in the flow path when the probe under aspiration passed through the cleaning water in one direction.

### Advantageous Effects of Invention

According to the present invention, it is possible to provide an automatic analyzing apparatus and a probe position detecting method that enable detection of an abnormality in a relative positional relationship between a probe and cleaning water without depending on a surface state of the probe or without depending on electromagnetic noise or physical properties such as conductivity of the cleaning water. Problems, configurations, and effects other than those described above will be clarified by the following description of embodiments.

### Brief Description of Drawings

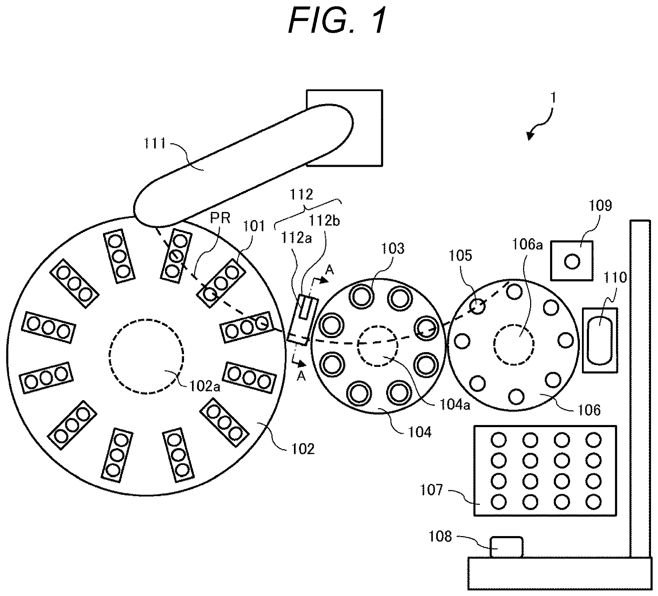

[FIG. 1] FIG. 1 is a schematic configuration view of an automatic analyzing apparatus according to a first embodiment as viewed from an upper side in a vertical direction.

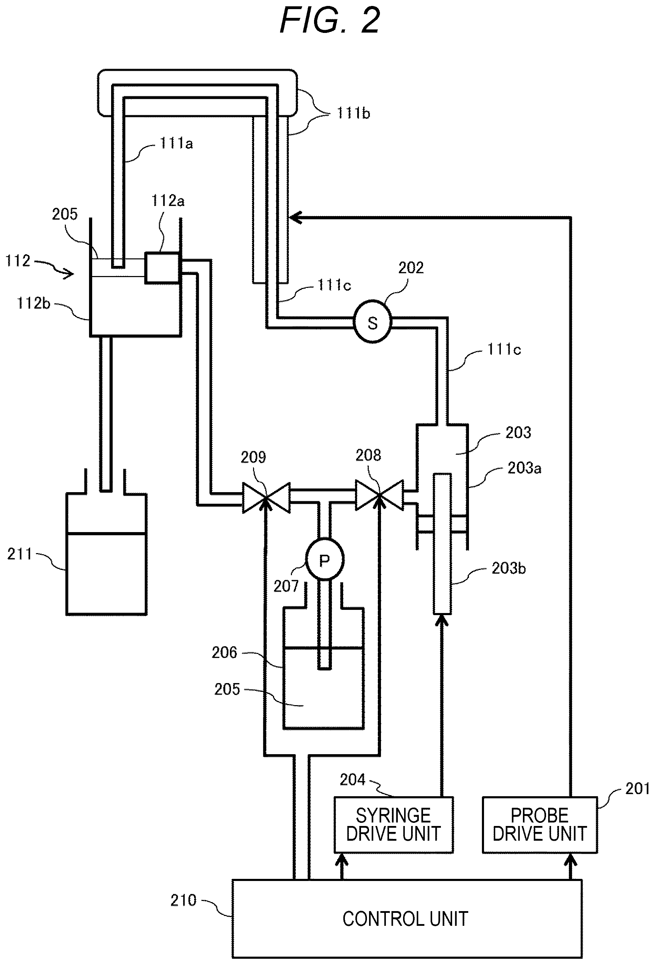

[FIG. 2] FIG. 2 is a view for explaining a configuration of a pipetting mechanism and a cleaning mechanism according to the first embodiment.

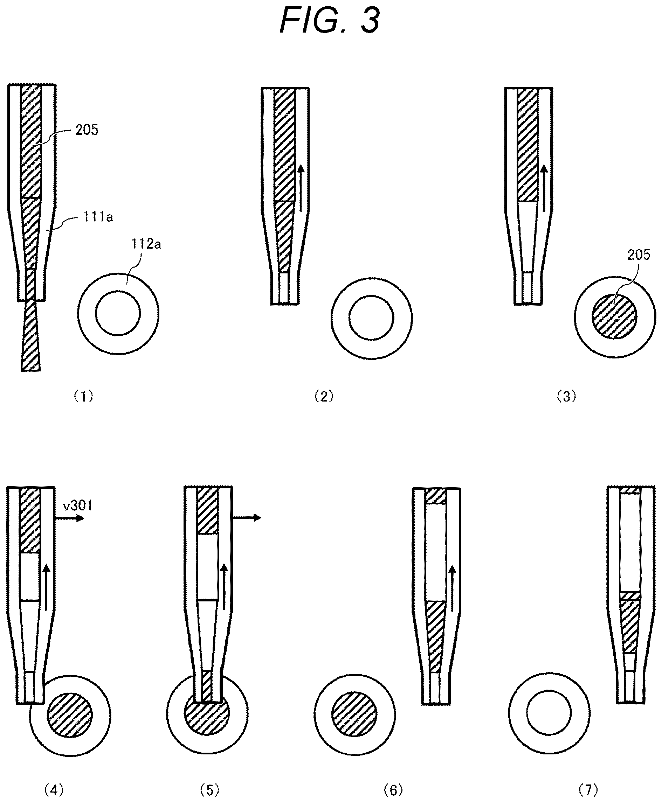

[FIG. 3] FIG. 3 is a view for explaining operations of a probe and a cleaning nozzle according to the first embodiment.

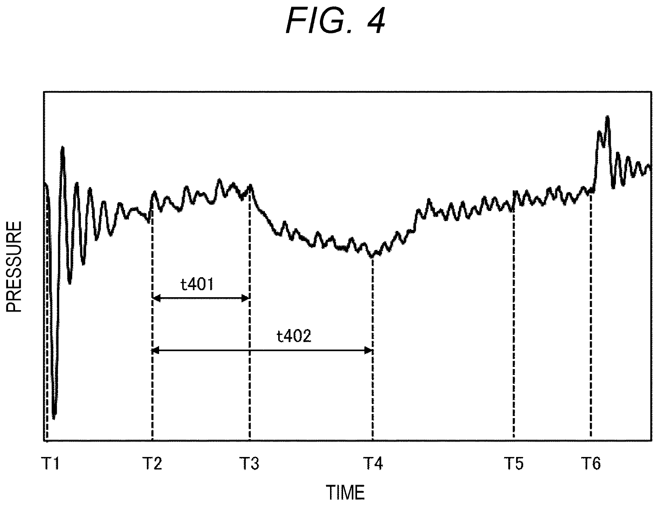

[FIG. 4] FIG. 4 is a diagram illustrating an example of a time series of a pressure measured by a pressure sensor according to the first embodiment as a pressure waveform.

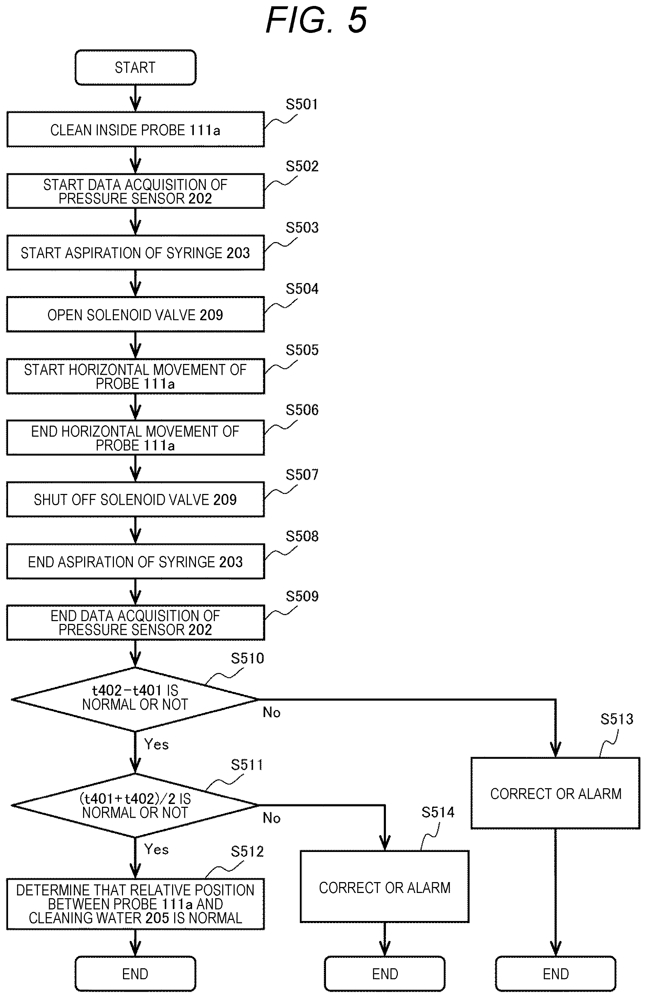

[FIG. 5] FIG. 5 is a flowchart for explaining a procedure for detecting an abnormality in a relative positional relationship between the probe and cleaning water according to the first embodiment.

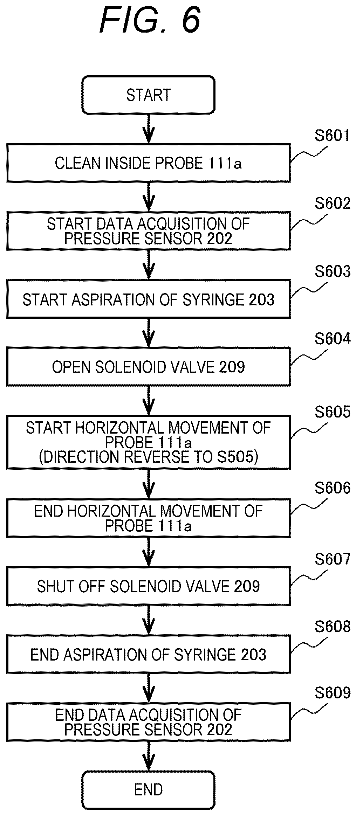

[FIG. 6] FIG. 6 is a flowchart illustrating another example of a procedure for acquiring a pressure waveform according to a second embodiment.

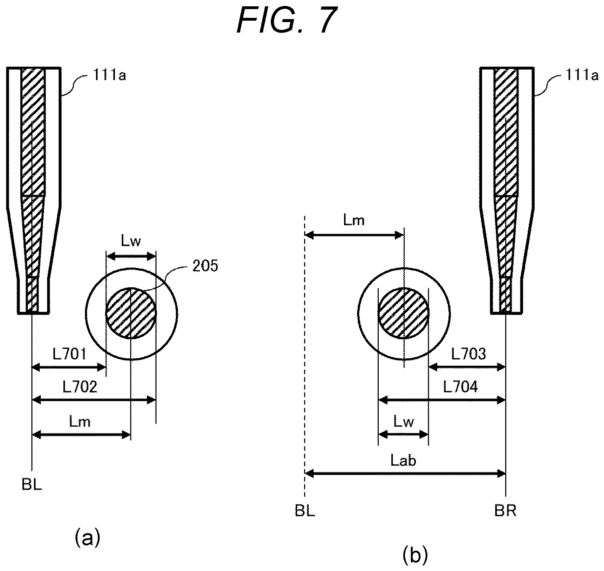

[FIG. 7] FIG. 7 is a view illustrating a passing start distance and a passing completion distance of a probe in a forward path and a backward path according to the second embodiment.

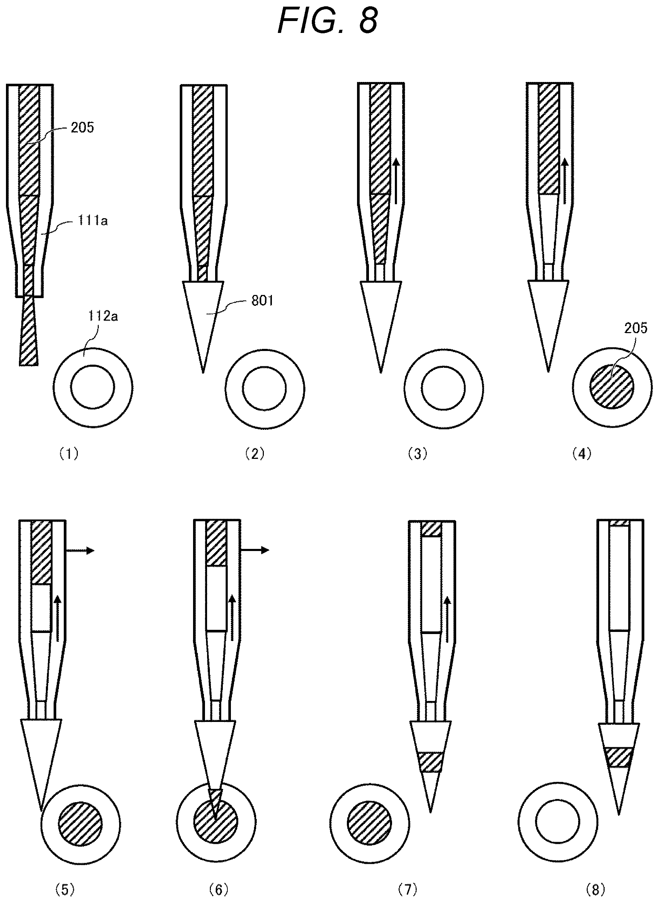

[FIG. 8] FIG. 8 is a view for explaining operations of a probe having a distal end to which a tip is attached and a cleaning nozzle according to a first modification.

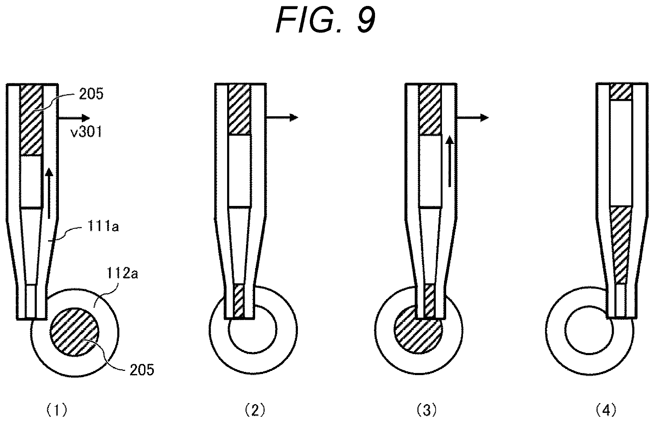

[FIG. 9] FIG. 9 is a view for explaining another example of operation of a cleaning nozzle according to a second modification.

### Description of Embodiments

### <First Embodiment>

FIG. 1 is a schematic configuration view of an automatic analyzing apparatus according to a first embodiment as viewed from an upper side in a vertical direction. A reagent bottle 101 containing a reagent to be used for analysis is held on a reagent disk 102. A sample vessel 103 containing a sample is held on a sample disk 104. A reaction vessel 105 for reacting the sample with the reagent is held in an incubator 106 whose temperature is controlled to a fixed temperature.

The reaction vessel 105 is mounted on an automatic analyzing apparatus 1 in a state of being placed on a reaction vessel tray 107, and is conveyed onto the incubator 106 by a gripper 108. Components of a solution being reacted in the reaction vessel 105 are detected by a detection unit 109. When the detection ends, the used reaction vessel 105 is discarded to a reaction vessel discard port 110 by the gripper 108.

The automatic analyzing apparatus 1 has a pipetting mechanism 111 for quantifying a sample and a reagent. The pipetting mechanism 111 aspirates necessary sample and reagent using a probe 111a (see FIG. 2) provided below in the vertical direction. The pipetting mechanism 111 moves around its one end such that the other end to which the probe is fixed draws an arc in a horizontal direction. PR in FIG. 1 shows a movement path of the probe of the pipetting mechanism 111.

The automatic analyzing apparatus 1 has a cleaning mechanism 112. The cleaning mechanism 112 cleans an outer wall of the probe of the pipetting mechanism, and has a cleaning nozzle 112a that discharges cleaning water, and a cleaning tub 112b that covers the cleaning water so as not to flow out. The cleaning nozzle 112a can clean the pipetting mechanism 111 by discharging the cleaning water to the probe of the pipetting mechanism 111 when the probe of the pipetting mechanism 111 passes through a front side. By cleaning the pipetting mechanism 111 in this manner, it is possible to prevent components of different liquids from being carried over when pipetting them.

In addition, the reagent disk 102, the sample disk 104, and the incubator 106 respectively have moving mechanisms 102a, 104a, and 106a (each integrated with a disk) that are rotationally driven. The reagent disk 102, the sample disk 104, and the incubator 106 are moved by their own moving mechanisms to positions where the pipetting mechanism 111 can aspirate and discharge liquid.

Here, the position where the pipetting mechanism 111 can aspirate and discharge the liquid is on the movement path PR of the probe of the pipetting mechanism 111.

FIG. 2 is a view for explaining a configuration of the pipetting mechanism and the cleaning mechanism according to the first embodiment. Specifically, FIG. 2 is a cross-sectional view taken along line A-A of the pipetting mechanism 111 and the cleaning mechanism 112 when the pipetting mechanism 111 overlaps the cleaning mechanism 112 in FIG. 1.

The pipetting mechanism 111 has the probe 111a that aspirates and discharges liquid, and an arm 111b that supports the probe 111a. Note that the arm 111b internally has a flow path for feeding liquid aspirated by the probe 111a and liquid discharged by the probe 111a. The arm 111b performs the above operation in which one end to which the probe 111a is fixed draws an arc in the horizontal direction (hereinafter, it is abbreviated as "horizontal movement") and operation in which the arm 111b itself moves in the vertical direction. The operation of the arm 111b is realized by a probe drive unit 201 configured by a motor or the like.

A tube 111c is a flow path connecting the flow path inside the arm 111b and a syringe 203. The tube 111c is provided with a pressure sensor 202 that measures a pressure in the tube.

The syringe 203 causes the probe 111a to aspirate and discharge liquid by moving of a plunger 203b with respect to a cylinder 203a. Specifically, when the plunger 203b is pushed into the cylinder 203a, cleaning water 205 from a pump 207 and a solenoid valve 208 is discharged from a distal end of the probe 111a, and when the plunger 203b is pulled out from the cylinder 203a, the probe 111a aspirates. Such movement of the plunger 203b is realized by a syringe drive unit 204 configured by a motor or the like.

A cleaning water tank 206 contains the cleaning water 205. Although pure water having conductivity of 1 µS/cm or less is used as the cleaning water 205 of the present embodiment, the present invention is not limited thereto. The cleaning water 205 is sent into a flow path through the pump 207. By opening and shutting off the solenoid valve 208, it is possible to feed and stop feeding the cleaning water 205 into the syringe 203. Then, the syringe 203 to which the cleaning water 205 has been fed can feed the cleaning water 205 to the probe 111a, the flow path inside the arm 111b, the tube 111c, and the pressure sensor 202 by the above-described operation.

In the present embodiment, it is assumed that as an initial state, the probe 111a, the flow path inside the arm 111b, the tube 111c, the pressure sensor 202, and the syringe 203 are filled with the cleaning water 205. The probe 111a can clean a flow path inside the probe 111a by discharging the cleaning water 205 from the distal end.

The cleaning mechanism 112 includes the cleaning nozzle 112a that discharges the cleaning water 205, and the cleaning tub 112b that covers the cleaning water 205 so as not to flow out. The cleaning tub 112b has a configuration in which only an upper part is open to allow the probe 111a to enter from above. However, the invention is not limited thereto, and for example, the opening may also be provided in a wall of the cleaning tub 112b on the movement path PR illustrated in FIG. 1 so that the probe 111a can enter by horizontal movement.

When the probe 111a enters the cleaning tub 112b and the probe 111a is positioned in front of the cleaning nozzle 112a, the outer wall of the probe 111a can be cleaned by discharging the cleaning water 205 from the cleaning nozzle 112a to the probe 111a. Note that the cleaning water 205 discharged in the cleaning tub 112b flows into a waste liquid tank 211 through a pipe provided below the cleaning tub 112b.

Feeding and stopping the feeding of the cleaning water 205 to the cleaning nozzle 112a are controlled by opening and shutting off a solenoid valve 209. Specifically, by opening the solenoid valve 209, the cleaning water 205 is fed from the cleaning nozzle 112a, and by shutting off the solenoid valve 209, the cleaning water 205 from the cleaning nozzle 112a is stopped. Examples of a discharge port shape of the cleaning nozzle 112a include a circular shape having a radius of about 1 to 3 mm, a rectangular shape, and an elliptical shape. Examples of an angle at which the cleaning water 205 is discharged include a horizontal direction, an obliquely upward direction, and an obliquely downward direction. Shown as an example in FIG. 3 and subsequent drawings is a case where the cleaning nozzle 112a has a circular discharge port shape, and the cleaning water 205 is discharged in the horizontal direction. An interval between the probe 111a and the cleaning nozzle 112a is preferably about 1 to 5 mm. In the present embodiment, a discharge flow rate of the cleaning water 205 is about 1 to 10 mL/s, and the cleaning water 205 is linearly discharged from the cleaning nozzle 112a.

Operations of the probe drive unit 201, the syringe drive unit 204, the solenoid valve 208, and the solenoid valve 209 are controlled by a control unit 210.

In order to efficiently clean the outer wall of the probe 111a, it is desirable to accurately grasp a relative positional relationship between the cleaning water 205 discharged from the cleaning nozzle 112a and the probe 111a. For example, by accurately grasping a positional relationship in the vertical direction between the cleaning water 205 discharged from the cleaning nozzle 112a and the probe 111a, it is possible to clean a part of the outer wall of the probe 111a that requires cleaning without fail. In addition, by accurately grasping a positional relationship between the cleaning water 205 discharged from the cleaning nozzle 112a and the probe 111a in the horizontal direction, timing of discharging the cleaning water 205 from the cleaning nozzle 112a can be appropriately controlled in accordance with the horizontal movement of the probe 111a. For this purpose, it is necessary to grasp the relative positional relationship between the cleaning water 205 and the probe 111a.

The automatic analyzing apparatus 1 according to the present embodiment estimates a relative positional relationship between the probe 111a and the cleaning nozzle 112a using the pressure sensor 202. FIG. 3 is a view for explaining operations of the probe and the cleaning nozzle according to the first embodiment. FIG. 3 is a front view of the discharge port of the cleaning nozzle 112a. The operation of FIG. 3 is performed inside the cleaning tub 112b.

First, as shown in FIG. 3(1), the probe 111a is located on the front left side of the cleaning nozzle 112a, and discharges the cleaning water 205 from the inside of the probe 111a to clean the inside of the probe 111a. A position of the probe 111a at this time is defined as a movement start position. Discharge of the cleaning water 205 from the inside of the probe 111a is performed by operation of opening/shut-off of the solenoid valve 208 or of discharging by the syringe 203 illustrated in FIG. 2, or a combination thereof. Subsequently, as illustrated in FIG. 3(2), the probe 111a starts aspiration. Here, the probe 111a aspirates air. Next, as shown in FIG. 3(3), the solenoid valve 209 shown in FIG. 2 is opened to start discharging the cleaning water 205 from the cleaning nozzle 112a. In a state where the cleaning water 205 is discharged from the cleaning nozzle 112a, the probe drive unit 201 horizontally moves the probe 111a as shown in FIG. 3(4) to cause the probe to pass through the cleaning water 205 as shown in FIG. 3 (5). The probe 111a aspirates the cleaning water 205 when passing through the cleaning water 205. After completion of the passing, as shown in FIG. 3(6), the horizontal movement of the probe 111a is ended.

A position of the probe 111a at this time is defined as a movement end position. Then, as shown in FIG. 3(7), the solenoid valve 209 illustrated in FIG. 2 is shut off to end the discharge of the cleaning water 205 from the cleaning nozzle 112a and end the aspiration of the probe 111a. In FIG. 3, a speed of horizontal movement of the probe 111a is defined as v301 and is defined to be constant. Although in FIG. 3, the horizontal movement from the left side to the right side is illustrated, the direction of the horizontal movement may be reversed.

During the aspiration operation of the probe 111a illustrated in FIGS. 3(2) to 3(6), the cleaning water 205 is aspirated from the distal end of the probe 111a only while the distal end of the probe 111a passes through the cleaning water 205, and in other cases, air is aspirated. Since a viscosity of fluid is different between the air and the cleaning water 205, a passing start time when the probe 111a entered the cleaning water 205 and a passing completion time when the probe 111a passed through the cleaning water 205 can be estimated by measuring the pressure in the tube 111c by the pressure sensor 202 during the aspiration operation of the probe 111a illustrated in FIGS. 3(2) to 3(6).

FIG. 4 is a diagram illustrating an example of a time series of a pressure measured by the pressure sensor according to the first embodiment as a pressure waveform. In FIG. 4, the vertical axis represents pressure, and the horizontal axis represents time.

Time T1 is an aspiration start time of the probe 111a. In the pressure waveform, unsteady pulsation accompanying the start of air aspiration by the probe 111a occurs near the aspiration start time T1, and a width of the pulsation gradually decreases.

Time T2 is a horizontal movement start time at which the probe 111a starts the horizontal movement.

Time T3 is the passing start time at which the probe 111a entered the cleaning water 205. The probe 111a aspirates air before the passing start time T3, and aspirates the cleaning water 205 after the passing start time T3. Since the cleaning water 205 has a higher viscosity than air, a pressure loss at the time of aspiration is large, and the pressure measured by the pressure sensor 202 is lower at the time of aspiration of the cleaning water 205 than at the time of aspiration of air. Therefore, a trend of the pressure decreases after the passing start time T3.

Therefore, in the pressure waveform, a decrease start time at which the trend of the pressure started to decrease can be estimated as the passing start time T3. Note that the trend refers to a tendency of pressure time series data during the horizontal movement of the probe. By monitoring the trend of the pressure, the passing start time T3 can be estimated without any problem also in a pressure waveform including a pulsation. In the following, description will be made with the horizontal movement start time T2 referred to as a reference time, and time from the reference time to the passing start time T3 referred to as a passing start time period t401.

Time T4 is the passing completion time when the probe 111a finished passing through the cleaning water 205. The probe 111a aspirates the cleaning water 205 before the passing completion time T4, and aspirates air after the passing completion time T4. As described above, since the pressure measured by the pressure sensor 202 is lower when the cleaning water 205 is aspirated than when the air is aspirated, the trend of the pressure increases after the passing completion time T4. Therefore, in the pressure waveform, an increase start time at which the trend of the pressure started to increase can be estimated as the passing completion time T4. In the following, description will be made with time from the horizontal movement start time T2, which is the reference time, to the passing completion time T4, referred to as a passing completion time period t402.

Time T5 is a horizontal movement end time at which the probe 111a ends the horizontal movement.

Time T6 is an aspiration end time of the probe 111a.

In a case where the movement start position of the probe 111a shown in FIGS. 3(1) to 3(3) is defined as the reference position, when using the passing start time period t401 and the passing completion time period t402 shown in the pressure waveform of FIG. 4, a distance from the reference position to a position where the probe 111a entered the cleaning water 205 can be estimated as v301×t401, and a distance from the reference position to a position where the probe 111a passed through the cleaning water 205 can be estimated as v301×t402. Furthermore, by using these, a center arrival distance from the reference position to a center position of the cleaning water 205 can be estimated as v301× (t401+t402)/2, and a passing width of the cleaning water 205 through which the probe 111a passed can be estimated as v301× (t402-t401).

When the positions of the probe 111a and the cleaning water 205 in the horizontal direction are misaligned, the center position v301× (t401+t402)/2 of the cleaning water 205 from the reference position changes. Furthermore, since as illustrated in FIGS. 3(3) to 3(6), a cross section of the cleaning water 205 is circular, when the positions of the probe 111a and the cleaning water 205 in the vertical direction are misaligned, the passing width v301× (t402-t401) of the cleaning water 205 changes. For example, when the distal end of the probe 111a passes through the center of the cleaning water 205 in the vertical direction, the passing width v301× (t402-t401) of the cleaning water 205 takes a value close to a diameter of the circle of the cross section of the cleaning water 205, and as the distal end of the probe 111a is shifted to the upper side or the lower side in the vertical direction of the cleaning water 205, the passing width v301× (t402-t401) of the cleaning water 205 takes a smaller value.

Therefore, by calculating the center position v301× (t401+t402)/2 of the cleaning water 205 from the reference position and the passing width v301× (t402-t401) of the cleaning water 205 on the basis of the pressure waveform in FIG. 4, positional relationships between the probe 111a and the cleaning water 205 in the horizontal direction and the vertical direction can be estimated.

In addition, when v301 is a fixed value, by calculating a center arrival time period (t401+t402)/2 required for the probe 111a to horizontally move from the reference position to the center position of the cleaning water 205 and a passing time period (t402-t401) from the passing start time T3 to the passing completion time T4, it is possible to similarly estimate the positional relationships between the probe 111a and the cleaning water 205 in the horizontal direction and the vertical direction. In the following, an example will be described in which assuming that the horizontal movement speed v301 is constant, the positional relationships between the probe 111a and the cleaning water 205 in the horizontal direction and the vertical direction are directly estimated using the center arrival time period (t401+t402)/2 and the passing time period (t402-t401).

FIG. 5 is a flowchart for explaining a procedure for detecting an abnormality in the relative positional relationship between the probe and cleaning water according to the first embodiment. Steps S501 to S509 are obtained by adding start (S502) and end (S509) of data acquisition of the pressure sensor 202 to the operations shown in FIGS. 3(1) to 3(7).

Specifically, first, as Step S501, the inside of the probe 111a is cleaned (corresponding to FIG. 3(1)). In order to acquire the pressure waveform after start of aspiration of the syringe 203 (S503), data acquisition of the pressure sensor 202 is started as Step S502 prior to the start of the aspiration of the syringe 203 (S503). Then, as Step S503, aspiration of the probe 111a is started by starting the aspiration of the syringe 203 (corresponding to FIG. 3(2)). Subsequently, as Step S504, the solenoid valve 209 is opened to start discharge of the cleaning water 205 from the cleaning nozzle 112a (corresponding to FIG. 3(3)). Thereafter, as Step S505, the probe drive unit 201 causes the probe 111a to start the horizontal movement (corresponding to FIG. 3(4)).

After the probe 111a passes through the cleaning water 205 (corresponding to FIG. 3(5)), the horizontal movement of the probe 111a is ended as Step S506 (corresponding to FIG. 3(6)). Then, as Step S507, the solenoid valve 209 is shut off to end the discharge of the cleaning water 205 from the cleaning nozzle 112a (corresponding to FIG. 3(7)), and as Step S508, the aspiration of the probe 111a is ended by stopping the aspiration of the syringe 203 (corresponding to FIG. 3(7)). Since the acquisition of the necessary pressure waveform is completed up to Step S508, the data acquisition of the pressure sensor 202 is ended as Step S509.

As Step S510, the control unit 210 estimates the horizontal movement start time T2, the passing start time T3, and the passing completion time T4 on the basis of the pressure waveform acquired from the pressure sensor 202, calculates the passing start time period t401 and the passing completion time period t402 described above, and then determines whether the passing time period (t402-t401) is within a predetermined range or not. For example, with the predetermined range defined in advance, the control unit 210 determines that it is normal when the passing time period (t402-t401) is within the predetermined range. Note that the predetermined range may be individually set for each apparatus in consideration of an error for each apparatus due to manufacturing, assembly, or the like, or may be set as an absolute range regardless of the apparatus.

In addition, the control unit 210 can also compare a previous value and a current value of the passing time period (t402-t401) each time the passing time period (t402-t401) is calculated, and determine that it is normal when a difference between the previous value and the current value is equal to or less than a certain value. The method of comparing the previous value with the current value can suppress an influence of an error on each apparatus due to manufacturing, assembly, or the like, similarly to the case of setting a value of a predetermined range for each apparatus.

When it is determined in Step S510 that the passing time period (t402-t401) is normal, it is determined as Step S511 whether the center arrival time period (t401+t402)/2 is normal or not. The method of determining that the center arrival time period (t401+t402)/2 is normal is similar to the method of determining that the passing time period (t402-t401) is normal in Step S510.

When determination is made in Step S511 that the center arrival time period (t401+t402)/2 is normal, it can be determined that the positional relationships between the probe 111a and the cleaning water 205 in both the horizontal direction and the vertical direction are normal and that there is no positional misalignment. Therefore, as Step 512, determination is made that the relative positional relationship between the probe 111a and the cleaning water 205 is normal. Thereafter, cleaning can be performed as usual.

When determination is made in Step S510 that the passing time period (t402-t401) is not normal, it is estimated that the positional misalignment occurs in the vertical direction between the probe 111a and the cleaning water 205. Therefore, as Step S513, the control unit 210 causes the probe drive unit 201 to correct the position of the probe 111a in the vertical direction so that the passing time period (t402-t401) becomes normal. For example, the control unit 210 instructs the probe drive unit 201 on an amount of correction of the position of the probe 111a in the vertical direction so that the passing time period (t402-t401) falls within the predetermined range described above or so that the current value of the passing time period (t402-t401) becomes the previous value, thereby causing the probe drive unit 201 to correct the position of the probe 111a in the vertical direction. This enables the position of the probe 111a in the vertical direction to be automatically corrected. In the correction of the position of the probe 111a in the vertical direction, the passing width v301× (t402-t401) may be used instead of the passing time period (t402-t401).

In addition, the control unit 210 may be connected to a display unit and cause the display unit to display an alarm indicating that the passing time period (t402-t401) is not normal as Step S513. This enables a user viewing the display unit to manually correct the position of the probe 111a in the vertical direction.

Furthermore, a change of the pressure of the pump 207 which pushes the cleaning water 205 is a possible cause of the positional misalignment between the probe 111a and the cleaning water 205 in the vertical direction. Specifically, it is a case where the cleaning water 205 which is supposed to be discharged from the cleaning nozzle 112a in the horizontal direction is discharged downward than the horizontal direction due to a decrease in the pressure of the pump 207, so that positional misalignment occurs between the probe 111a and the cleaning water 205 in the vertical direction. Even in such a case, when the control unit 210 causes the display unit to display the alarm, a user or a service engineer can adjust the pressure of the pump 207 or the like to correct the misalignment in the positional relationship in the vertical direction between the probe 111a and the cleaning water 205.

When determination is made in Step S511 that the center arrival time period (t401+t402)/2 is not normal, it is estimated that positional misalignment occurs in the horizontal direction between the probe 111a and the cleaning water 205. Therefore, as Step S514, the control unit 210 causes the probe drive unit 201 to correct the position of the probe 111a in the horizontal direction so that the center arrival time period (t401+t402)/2 becomes normal. The correction method is similar to Step S513. In addition, as Step S514, the control unit 210 may cause the display unit to display the alarm indicating that the center arrival time period (t401+t402)/2 is not normal similarly to Step S513. Note that regarding the abnormality in the positional relationship in the horizontal direction, it is considered that an influence of the decrease in the pressure of the pump 207 is small.

Furthermore, when determined to be abnormal in Step S510 or S511, the control unit 210 may correct one or both of position information of the probe 111a and position information of the cleaning water 205 stored therein.

The horizontal positional relationship between the probe 111a and the cleaning water 205 can be estimated with higher accuracy as the speed v301 of the horizontal movement of the probe 111a is smaller. Therefore, for example, when it is determined in Step S511 that the positional relationship in the horizontal direction between the probe 111a and the cleaning water 205 is abnormal, in order to enhance accuracy of the correction in Step S514, the speed v301 of the horizontal movement may be reduced, and Steps S502 to S510 may be performed again to correct Step S514 using the recalculated center arrival time period (t401+t402)/2.

In the pressure waveform illustrated in FIG. 4, in order to accurately estimate the passing start time T3 and the passing completion time T4, noise is desirably as small as possible after the horizontal movement start time T2. For example, in the procedure illustrated in FIG. 5, after the aspiration of the probe 111a is started (S503), starting the horizontal movement of the probe 111a (S505) at a fixed time interval enable the waveform after the horizontal movement start time T2 to be acquired while suppressing an influence of unsteady pressure pulsation accompanying the aspiration start of the probe 111a, which causes noise. In the typical automatic analyzing apparatus 1, it is desirable to provide a time interval of 100 milliseconds or more between S503 and S505. Alternatively, the movement start position may be adjusted such that the probe 111a enters the cleaning water 205 after a lapse of 100 milliseconds or more after the aspiration of the probe 111a is started (S503).

While the probe 111a horizontally moves, it is desirable that the cleaning water 205 be uniformly discharged. However, immediately after the solenoid valve is opened (S504), the cleaning water 205 is less likely to be uniformly discharged from the cleaning nozzle 112a. Therefore, it is desirable to start the horizontal movement of the probe 111a (S505) at a fixed time interval after the solenoid valve is opened (S504). In the typical automatic analyzing apparatus 1, it is desirable to provide a time interval of 20 milliseconds or more between S504 and S505. Alternatively, the movement start position of the probe 111a may be adjusted such that the probe 111a enters the cleaning water 205 after a lapse of 20 milliseconds or more after the solenoid valve is opened (S504).

On the other hand, the pressure waveform after the horizontal movement of the probe 111a is ended (S506) is not used for the determination in S510 and S511. For this reason, after the horizontal movement of the probe 111a is ended (S506), it is desirable to shut off the solenoid valve 209 (S507) as soon as possible to minimize an amount of the cleaning water 205 used.

A period during which the pressure waveform should be acquired in the procedure of FIG. 5 is between S505 and S506 during which the probe 111a moves horizontally. Therefore, when the pressure sensor 202 acquires data between S505 and S506, i.e., in a case where S502 is present before S505, and S509 is present after S506, S502 and S509 may be replaced with other procedures.

According to the procedure of FIG. 5, it is possible to determine whether or not the relative positional relationship between the probe 111a and the cleaning water 205 is normal, and when the relative positional relationship between the probe 111a and the cleaning water 205 is abnormal, to correct the relative positional relationship between the probe 111a and the cleaning water 205. This enables appropriate cleaning of the outer wall of the probe 111a to be ensured, and enables reliability of an inspection result of the automatic analyzing apparatus to be improved.

In the present embodiment, since the abnormality in the relative positional relationship between the probe 111a and the cleaning water 205 is detected by the change in pressure when the cleaning water 205 is aspirated, even if there is wetting due to dew condensation or unwashed water on the surface of the probe 111a, it is possible to accurately detect the wetting. In addition, the configuration using the pressure sensor described in the present embodiment is not so subjected to an influence of electromagnetic noise or physical properties such as conductivity of cleaning water, as compared with a configuration using a conductivity detection type sensor or a capacitance detection type sensor. Therefore, when the conductivity of the cleaning water is low, particularly when pure water having a conductivity of 1 µS/cm or less is used as the cleaning water 205, the configuration using the pressure sensor according to the present embodiment can more accurately detect the abnormality in the relative positional relationship between the probe 111a and the cleaning water 205 than the configuration using the conductivity detection type sensor or the capacitance detection type sensor.

### <Second Embodiment>

In the present embodiment, a path of the horizontal movement of the probe 111a illustrated in FIG. 3, i.e., a path traveling from the left side which is the movement start position to the right side which is the movement end position is defined as a forward path, and a path traveling in a reverse direction in the forward path, i.e., a path traveling from the right side which is the movement end position of the forward path to the left side which is the movement start position of the forward path in FIG. 3 is defined as a backward path.

In the present embodiment, after Step S509 in FIG. 5, the probe 111a is horizontally moved along the backward path, and an abnormality in the relative positional relationship between the probe 111a and the cleaning water 205 is detected after Step S510 on the basis of the pressure waveforms acquired in the forward path and the backward path.

FIG. 6 is a flowchart illustrating another example of a procedure for acquiring a pressure waveform according to the second embodiment. Steps 601 to 609 in FIG. 6 are similar to Steps 501 to 509 in FIG. 5 except that the path of the horizontal movement of the probe 111a is the above-described backward path. Steps S601 to S609 in FIG. 6 are procedures performed between Steps S509 and S510 in FIG. 5.

In the following, description will be made of a method of calculating, in Step S510 of FIG. 5, the center arrival time period and the passing time period using the pressure waveform acquired in Steps S501 to S509 of FIG. 5 and the pressure waveform acquired in Steps S601 to S609 of FIG. 6.

FIG. 7 is a view illustrating a passing start distance and a passing completion distance of the probe in the forward path and the backward path according to the second embodiment. FIG. 7(a) is a view relating to the forward path, where BL is a movement start position in the forward path. FIG. 7(b) is a view relating to the backward path, where BR is a movement start position in the backward path. In addition, a distance between the movement start position BL in the forward path and the movement start position BR in the backward path is defined as Lab.

Reference sign L701 in FIG. 7(a) denotes the passing start distance from the movement start position BL until the probe 111a enters the cleaning water 205. Furthermore, L702 denotes the passing completion distance from the movement start position BL until the probe 111a passes through the cleaning water 205. Note that the movement start position BL denotes a position where the probe 111a starts the horizontal movement as Step S505 of FIG. 5. Therefore, when a passing start time period from the start of the horizontal movement of the probe 111a at the movement start position BL until the probe enters the cleaning water 205 is defined as t401L, and the horizontal movement speed of the probe 111a is defined as v301, it can be expressed as L701=v301×t401L. Similarly, when a passing completion time from the start of the horizontal movement of the probe 111a at the movement start position BL until the probe passes through the cleaning water 205 is defined as t402L, it can be expressed as L702=v301×t402L. The passing start time period t401L corresponds to t401 in FIG. 4 in the forward path, and the passing completion time period t402L corresponds to t402 in FIG. 4 in the forward path.

Reference sign L703 in FIG. 7(b) denotes a passing start distance from the movement start position BR until the probe 111a enters the cleaning water 205. In addition, L704 denotes a passing completion distance from the movement start position BR until the probe 111a passes through the cleaning water 205. The movement start position BR is a position where the probe 111a starts the horizontal movement as Step S605 of FIG. 6. Therefore, when a passing start time period from the start of the horizontal movement of the probe 111a at the movement start position BR until the probe enters the cleaning water 205 is defined as t401R, and the horizontal movement speed of the probe 111a is defined as v301, it can be expressed as L703=v301×t401R. Similarly, when a passing completion time period from the start of the horizontal movement of the probe 111a at the movement start position BR until the probe passes through the cleaning water 205 is defined as t402R, it can be expressed as L704=v301×t402R. The passing start time period t401R corresponds to t401 in FIG. 4 in the backward path, and the passing completion time period t402R corresponds to t402 in FIG. 4 in the backward path. In addition, it is assumed that the horizontal movement speed of the probe 111a in the forward path and the backward path is v301 and only the direction is opposite to each other between the forward path and the backward path.

In the following, a center arrival distance from the movement start position BL to the center of the cleaning water 205 is defined as Lm, and a passing width of the cleaning water 205 is defined as Lw as illustrated in FIG. 7(a). Then, a time period (center arrival time period) from when the probe 111a starts the horizontal movement at the movement start position BL until the probe reaches the center of the cleaning water 205 is defined as Tm, and a time period (passing time period) taken for the probe 111a to pass through the passing width Lw of the cleaning water 205 is defined as Tw.

In Step S510, the time periods t401L and t402L are calculated on the basis of the pressure waveform acquired in Steps S501 to S509 in FIG. 5, and the time periods t401R and t402R are calculated on the basis of the pressure waveform acquired in Steps S601 to S609 in FIG. 6. The method of calculating these time periods is similar to that in the first embodiment.

Subsequently, the center arrival time period and the passing time period are calculated on the basis of the time periods t401L, t402L, t401R, and t402R.

For example, when using the passing start distance L701 in the forward path illustrated in FIG. 7(a) and the passing start distance L703 in the backward path illustrated in FIG. 7(b), the center arrival distance Lm can be expressed as Lab/2+ (L701-L703)/2. When the center arrival distance Lm is divided by the speed v301 to be converted into the center arrival time period Tm, Tm=Lab/(2xv301) + (t401 L-t401R)/2 is obtained. Therefore, in this case, the center arrival time period Tm can be calculated by estimating t401L from the pressure waveform acquired in Steps S501 to S509 in FIG. 5 and estimating t401R from the pressure waveform acquired in Steps S601 to S609 in FIG. 6.

Similarly, the center arrival distance Lm can also be calculated using the passing completion distance L702 in the forward path illustrated in FIG. 7(a) and the passing completion distance L704 in the backward path illustrated in FIG. 7(b). In this case, finally obtained is a center arrival time period Tm=Lab/(2×v301) + (t402 L-t402R)/2. Therefore, in this case, the center arrival time period Tm can be calculated by estimating t402L from the pressure waveform acquired in Steps S501 to S509 in FIG. 5 and estimating t402R from the pressure waveform acquired in Steps S601 to S609 in FIG. 6.

In addition, the center arrival time period Tm may be obtained as an average value of the above-described center arrival time period Tm based on the passing start time periods t401L and t401R and center arrival time period Tm based on the passing time periods t402L and t402R.

The passing start time period (t401L, t401R) and the passing completion time period (t402L, t402R) include a system error caused by a propagation time period of a pressure wave in the cleaning water 205 or air, processing of calculating time from a pressure waveform, and the like. Since the above-described center arrival time period Tm includes (t401 L-t401R)/2 and (t402 L-t402R)/2, a system error can be canceled by these values. Therefore, by using these values, it is possible to estimate a more accurate center arrival time period Tm with less system error.

In addition, the passing time period Tw is assumed to be, for example, an average value of the passing time period Tw= (t402 L-t401L) obtained from FIG. 7(a) and the passing time period Tw= (t402R-t401R) obtained from FIG. 7(b).

In the present embodiment, mainly in order to accurately detect an abnormality in the horizontal positional relationship between the probe 111a and the cleaning water 205, both the pressure waveform acquired in Steps S501 to S509 in FIG. 5 and the pressure waveform acquired in Steps S601 to S609 in FIG. 6 are used. However, when priority is given to reduction of a detection time period and a water consumption amount over detection accuracy of abnormality in the positional relationship in the horizontal direction between the probe 111a and the cleaning water 205, only the procedure of the first embodiment is performed without performing the operation of FIG. 6.

Furthermore, misalignment of the relative position between the probe 111a and the cleaning water 205 can be accurately corrected by performing the correction in Step S513 and the correction in Step S514 using the center arrival time period Tm and the passing time period Tw or the center arrival distance Lm and the passing width Lw of the cleaning water 205 obtained by the present embodiment.

The horizontal positional relationship between the probe 111a and the cleaning water 205 can be estimated with higher accuracy as the speed v301 of the horizontal movement of the probe 111a is smaller. Therefore, in a case of correcting the horizontal positional misalignment between the probe 111a and the cleaning water 205 (S514), the procedure of FIG. 5 is executed again with the horizontal movement speed reduced, and then, the procedure of FIG. 6 is executed, whereby estimation accuracy of a horizontal distance L can be further enhanced. The horizontal movement of the probe 111a at the time of re-executing the procedure of FIG. 5 and the horizontal movement of the probe 111a in the procedure of FIG. 6 desirably have the same speed.

In the procedure of FIG. 6, similarly to the procedure of FIG. 5, in order to suppress noise of the pressure waveform, it is desirable to provide a fixed time interval, for example, a time interval of 100 milliseconds or more between Step S603 and Step S605.

Furthermore, while the probe 111a horizontally moves, in order to uniformly discharge the cleaning water 205, it is desirable to provide a fixed time interval, for example, a time interval of 20 milliseconds or more between Step S604 and Step S605.

Furthermore, after the horizontal movement of the probe 111a is ended (S606), it is desirable to shut off the solenoid valve 209 as soon as possible (S607) to minimize the amount of the cleaning water 205 used.

A period during which the pressure waveform should be acquired in the procedure of FIG. 6 is between S605 and S606 during which the probe 111a moves horizontally. Therefore, when the pressure sensor 202 acquires data between S605 and S606, i.e., in a case where S602 is present before S605 and S609 is present after S606, S602 and S609 may be replaced with other procedures.

### <First Modification of First and Second Embodiments>

In the present modification, a case where a disposable tip 801 is used for the distal end of the probe 111a will be described. The present modification is applicable to both the first embodiment and the second embodiment. Although in the present modification, the tip 801 has a cone shape, the shape is not limited thereto.

FIG. 8 is a view for explaining operations of the probe having the distal end to which the tip is attached and the cleaning nozzle according to the first modification.

In the following, similarly to the first and second embodiments, a case will be considered in which an outer wall of the tip 801 attached to the distal end of the probe 111a accompanying the pipetting mechanism 111 is cleaned using the cleaning water 205 discharged from the cleaning nozzle 112a accompanying the cleaning tub 112b.

FIG. 8(1) is a view similar to FIG. 3(1). In the present modification, as shown in FIG. 8(2), after operation of FIG. 8(1), the tip 801 is attached to the distal end of the probe 111a. Therefore, when the present modification is applied to the first embodiment, a procedure of attaching the tip 801 to the distal end of the probe 111a is added after S501 in FIG. 5. The attached tip 801 constitutes a part of the probe 111a. In addition, the probe 111a to which the tip 801 is attached aspirates air or the cleaning water 205 by the tip 801 at the distal end. While a configuration illustrated in FIGS. 8(3) to 8(8) is different from that in FIGS. 3(2) to 3(7) in that the tip is attached to the distal end of the probe 111a, operations of the probe 111a and the cleaning nozzle 112a illustrated in FIGS. 8(3) to 8(8) are similar to those in FIGS. 3(2) to 3(7).

In addition, when the present modification is applied to the second embodiment, the same tip 801 may be used in the forward path and the backward path, or separate tips 801 may be used in the forward path and the backward path. In the latter case, a procedure of removing the tip 801 attached to the distal end of the probe 111a is added before S601 in FIG. 6, and a procedure of attaching another tip 801 to the distal end of the probe 111a is further added after S601.

By attaching the tip 801 to the distal end of the probe 111a and cleaning the outer wall of the tip 801 with the cleaning water 205, it is possible to prevent component carryover between different analyses, and it is thus possible to improve accuracy of an analysis result.

### <Second Modification of First and Second Embodiments>

In the first and second embodiments, as shown in FIGS. 3(3) to 3(6), aspiration of the probe 111a and discharge of the cleaning water 205 from the cleaning nozzle 112a are continued at all times during the horizontal movement of the probe 111a. In the present modification, the control unit 210 calculates a trend of the pressure in real time on the basis of the pressure acquired from the pressure sensor 202, and interrupts the aspiration of the probe 111a and the discharge of the cleaning water 205 from the cleaning nozzle 112a when a decrease in the trend of the pressure is detected during the horizontal movement of the probe 111a. As a method of calculating the trend of the pressure in real time, for example, there is a method, in which the control unit 210 includes a filter for suppressing pulsation of a pressure, of calculating a trend of the pressure on the basis of time differentiation of the pressure after filtering.

FIG. 9 is a view for explaining another example of operation of the cleaning nozzle according to the second modification. When the present modification is applied to the first embodiment, the operations of FIGS. 3(4) to 3(7) are replaced with operations of FIGS. 9(1) to 9(4).

FIG. 9(1) is similar to FIG. 3(4). Then, as shown in FIG. 9(2), when the probe 111a enters the cleaning water 205 and a decrease in the trend of the pressure is detected, the aspiration of the probe 111a and the discharge of the cleaning water 205 from the cleaning nozzle 112a are interrupted.

In order to estimate the relative positional relationship between the probe 111a and the cleaning water 205, it is necessary for the control unit 210 to detect an increase in the trend of the pressure. Therefore, immediately before the probe 111a finishes passing through the flow path of the cleaning water 205 discharged from the cleaning nozzle 112a, it is necessary to resume the aspiration of the probe 111a and the discharge of the cleaning water 205 from the cleaning nozzle 112a.

Therefore, for example, time taken for the probe 111a to horizontally move a distance corresponding to 50% of a diameter of the discharge port of the cleaning nozzle 112a is defined as an interruption time period, and after the interruption time has elapsed since a decrease in the trend of the pressure is detected, the aspiration of the probe 111a and the discharge of the cleaning water 205 from the cleaning nozzle 112a are resumed as shown in FIG. 9(3).

As shown in FIG. 9(4), when the probe 111a passes through the cleaning water 205 and an increase in the trend of the pressure is detected, the aspiration of the probe 111a, the discharge of the cleaning water 205 from the cleaning nozzle 112a, and the horizontal movement of the probe 111a are ended.

In the present modification, no detection of an increase in the trend of the pressure after FIG. 9(3) means that there is an abnormality in the positional relationship in the vertical direction between the probe 111a and the cleaning water 205. This case corresponds to the branch from S510 to S513 in FIG. 5.

In the present modification, by interrupting the discharge of the cleaning water 205, a consumption amount of the cleaning water 205 can be reduced as compared with the first and second embodiments. In addition, by canceling the operation after the detection of the increase in the trend of the pressure, it is possible to detect an abnormality in the relative positional relationship between the probe 111a and the cleaning water 205 in a short time.

Note that the present invention is not limited to the above-described embodiments and modifications, and includes various modifications. For example, the above embodiments have been described in detail for easy understanding of the present invention, and are not necessarily limited to those having all the described configurations. In addition, a part of the configuration of a certain embodiment can be replaced with the configuration of another embodiment, and to the configuration of the certain embodiment, the configuration of another embodiment can be added. In addition, it is possible to add, delete, and replace other configurations with respect to a part of the configuration of each embodiment.

### Reference Signs List

- 1: automatic analyzing apparatus
- 101: reagent bottle
- 102: reagent disk
- 102a: moving mechanism
- 103: sample vessel
- 104: sample disk
- 104a: moving mechanism
- 105: reaction vessel
- 106: incubator
- 106a: moving mechanism
- 107: reaction vessel tray
- 108: gripper
- 109: detection unit
- 110: reaction vessel discard port
- 111: pipetting mechanism
- 111a: probe
- 111b: arm
- 111c: tube
- 112: cleaning mechanism
- 112a: cleaning nozzle
- 112b: cleaning tub
- 201: probe drive unit
- 202: pressure sensor
- 203: syringe
- 203a: cylinder
- 203b: plunger
- 204: syringe drive unit
- 205: cleaning water
- 206: cleaning water tank
- 207: pump
- 208: solenoid valve
- 209: solenoid valve
- 210: control unit
- 211: waste liquid tank
- 801: tip

## Claims

1. An automatic analyzing apparatus comprising:
a pipetting mechanism that aspirates and discharges liquid by a probe;
a syringe that causes the pipetting mechanism to aspirate and discharge the liquid;
a flow path connecting the pipetting mechanism and the syringe;
a pressure sensor that measures a pressure in the flow path;
a cleaning mechanism that discharges cleaning water and cleans an outer wall of the probe with the cleaning water;
a probe drive unit that causes the probe under aspiration to move so as to aspirate the cleaning water when the probe passes through the cleaning water; and
a control unit that detects an abnormality in a relative positional relationship between the probe and the cleaning water on the basis of a change in the pressure in the flow path when the probe under aspiration passed through the cleaning water in one direction.

2. The automatic analyzing apparatus according to claim 1, wherein the control unit detects an abnormality in the relative positional relationship between the probe and the cleaning water on the basis of a decrease start time of a trend of the pressure in the flow path and an increase start time of the trend of the pressure in the flow path.

3. The automatic analyzing apparatus according to claim 1, wherein
when a path from a movement start position to a movement end position of the probe that passed through the cleaning water is defined as a forward path, the probe drive unit causes the probe under aspiration to move along a backward path that is a path traveling in a reverse direction in the forward path, and
the control unit detects an abnormality in the relative positional relationship between the probe and the cleaning water on the basis of the change in the pressure in the flow path when the probe under aspiration passed through the cleaning water in each of the forward path and the backward path.

4. The automatic analyzing apparatus according to claim 1, wherein the control unit detects an abnormality in a horizontal positional relationship between the probe and the cleaning water and an abnormality in a vertical positional relationship between the probe and the cleaning water as the abnormality in the relative positional relationship.

5. The automatic analyzing apparatus according to claim 4, wherein when a time period from a reference time to a decrease start time of a trend of a pressure in the flow path is defined as a passing start time period when the probe entered the cleaning water and a time period from the reference time to an increase start time of the trend of the pressure in the flow path is defined as a passing completion time period when the probe passed through the cleaning water, the control unit detects an abnormality in the horizontal positional relationship on the basis of an average value of the passing start time period and the passing completion time period and detects an abnormality in the vertical positional relationship on the basis of a difference between the passing start time period and the passing completion time period.

6. The automatic analyzing apparatus according to claim 1, wherein the cleaning mechanism stops the discharge of the cleaning water immediately after the probe enters the cleaning water, and resumes the discharge of the cleaning water immediately before the probe finishes passing through a flow path of the cleaning water.

7. The automatic analyzing apparatus according to claim 1, wherein the probe has a distal end to which a detachable tip is attached.

8. The automatic analyzing apparatus according to claim 1, further comprising a display unit that, when there is an abnormality in the relative positional relationship between the probe and the cleaning water, displays an alarm indicating that the relative positional relationship is abnormal.

9. The automatic analyzing apparatus according to claim 1, wherein the probe drive unit corrects the position of the probe such that the relative positional relationship between the probe and the cleaning water becomes normal when the control unit detects an abnormality in the relative positional relationship between the probe and the cleaning water.

10. The automatic analyzing apparatus according to claim 1, wherein the probe enters the cleaning water after 100 milliseconds or more from start of the aspiration by the probe.

11. A probe position detecting method comprising:
a moving step of moving a probe under aspiration so as to aspirate cleaning water when the probe passes through the cleaning water;
a measurement step of measuring a pressure in a flow path through which the cleaning water aspirated by the probe flows; and
a detection step of detecting an abnormality in a relative positional relationship between the probe and the cleaning water on the basis of a change in the pressure in the flow path when the probe under aspiration passed through the cleaning water in one direction.

12. The probe position detecting method according to claim 11, further comprising a correction step of correcting, when an abnormality in the relative positional relationship between the probe and the cleaning water is detected, the relative positional relationship between the probe and the cleaning water on the basis of the abnormality in the relative positional relationship between the probe and the cleaning water.
